# EUROPEAN PATENT SPECIFICATION

(11) **EP 4 266 716 B1**
(45) Date of publication and mention of the grant of the patent: **18.02.2026**
(21) Application number: 22831539.6
(22) Date of filing: 26.05.2022
(51) Int. Cl.: H04W 4/40, H04W 76/20, H04W 4/44

(54) **COMMUNICATION METHOD AND APPARATUS APPLIED TO REMOTE DRIVING, AND MEDIUM AND ELECTRONIC DEVICE**
KOMMUNIKATIONSVERFAHREN UND -VORRICHTUNG FÜR FERNANTRIEB SOWIE MEDIUM UND ELEKTRONISCHE VORRICHTUNG
PROCÉDÉ ET APPAREIL DE COMMUNICATION APPLIQUÉS À LA CONDUITE À DISTANCE, ET SUPPORT ET DISPOSITIF ÉLECTRONIQUE

(30) Priority: 01.07.2021 CN 202110749253
(43) Date of publication of application: 25.10.2023
(73) Proprietor: Tencent Technology (Shenzhen) Company Limited, Shenzhen, Guangdong, 518057 (CN)
(72) Inventor: LEI, Yixue, Shenzhen, Guangdong 518057 (CN)
(74) Representative: Novagraaf International SA
(86) International application number: PCT/CN2022/095144
(87) International publication number: WO 2023/273716

(56) References cited:
- WO-A1-2020/133208
- WO-A1-2020/172491
- CN-A- 109 040 322
- CN-A- 110 794 818
- CN-A- 111 634 286
- CN-A- 113 365 245
- US-A1- 2021 114 616
- US-A1- 2021 116 907

## Description

### FIELD OF THE TECHNOLOGY

This disclosure relates to the field of computers and communication technologies, and specifically, to a communication method and apparatus applied to remote driving, a medium, and an electronic device.

### BACKGROUND OF THE DISCLOSURE

Remote driving is a technology for implementing control on a vehicle by using long distance mobile communication, and is an important means to solve the problem of working in a dangerous and harsh environment (for example, earthquake relief, a toxic environment, a dangerous tunnel, fire-fighting and rescue, cliff path opening, or explosion site cleaning). With the development of a 5G network, strong support is provided for this low-delay driving manner.

In the related art, the basic principle of remote driving is to transmit driving instructions to a vehicle terminal in a downlink direction through a network, while the premise of transmitting the driving instructions is to transmit state parameters and visual information of the vehicle terminal to a remote driving terminal in an uplink direction through the network. In addition, remote driving also includes a plurality of driving modes, for example, a human remote control (HRC) mode and a machine remote control (MRC) mode. However, currently, there is no complete solution for switching between the remote driving modes.

WO 2020/172491 A1 provides methods and systems to allow a cellular network to change or recommend a change to the location of a device, the route of a device and speed of a device, and the physical distance between devices, and provides methods and systems to allow the cellular network to provide input into resource management for sidelink communications requiring strict QoS requirements by providing sidelink communication policies for specific tasks based on information received from the device or an application function.

US 2021/116907 A1 provides a method of autonomous driving and tele-operated vehicles. A vehicle artificial intelligence (AI) unit is configured to receive inputs from a plurality of vehicular sensors of a vehicle, locally process within the vehicle at least a first portion of the inputs, wirelessly transmit via a vehicular wireless transmitter at least a second portion of the inputs to a remote tele-operated processor located externally to the vehicle, wirelessly receive via a vehicular wireless receiver from the remote tele-driving processor, a remotely-computed processing result that is received from a remote AI unit, and implement a vehicular operating command based on the remotely-computed processing result, via an autonomous driving unit of the vehicle or via a tele-driving unit of the vehicle.

### SUMMARY

Embodiments of this disclosure provide a communication method and apparatus applied to remote driving, a medium, and an electronic device, which can further resolve the problem of remote driving mode switching in a process of remote driving at least to a certain extent, so that the remote driving can flexibly adapt to complex road working conditions and network conditions.

Other features and advantages of this disclosure will become apparent through the following detailed description or will be partially learned through the practice of this disclosure.

According to an aspect of the embodiments of this disclosure, a method for remotely controlling a vehicle terminal performed by a session management function entity is provided, including:
obtaining, by the session management function entity, protocol data unit (PDU) session parameters corresponding to a plurality of remote control modes of a vehicle terminal, the plurality of remote driving modes including a first remote control mode and a second remote control mode;
receiving, by the session management function entity while the vehicle terminal is controlled according to the PDU session parameter corresponding to the first remote control mode, mode switching information from an application function entity; the mode switching information indicating the first remote control mode is to be switched to the second remote control mode; and
controlling, by the session management function entity based on the mode switching information, the vehicle terminal to switch to remote control according to the PDU session parameter corresponding to the second remote control mode.

According to an aspect of the embodiments of this disclosure, a method for remotely controlling a vehicle terminal performed by an application function entity is provided, including:
performing, by the application function entity, communication negotiation with a core network element to determine PDU session parameters corresponding to a plurality of remote control modes of a vehicle terminal, the plurality of remote control modes including a first remote control mode and a second remote control mode; and
transmitting, by the application function entity while the vehicle terminal performs remote driving according to the PDU session parameter corresponding to the first remote control mode, mode switching information to the core network element when the vehicle terminal is to switch from the first remote control mode to the second remote control mode, the mode switching information indicating the core network element that the vehicle terminal is to switch to remote control according to the PDU session parameter corresponding to the second remote control mode.

According to an aspect of the embodiments of this disclosure, a computer-readable medium is provided, storing a computer program, the computer program, when executed by a processor, implementing the communication method applied to remote driving as described in the above embodiments.

According to an aspect of the embodiments of this disclosure, an electronic device is provided, including: one or more processors; and a storage apparatus, configured to store one or more programs, the one or more programs, when executed by the one or more processors, causing the one or more processors to implement the communication method applied to remote driving as described in the above embodiment.

According to an aspect of the embodiments of this disclosure, a computer program product or computer program is provided, the computer program product or computer program including computer instructions, the computer instructions being stored in a computer-readable storage medium. A processor of a computer device reads the computer instructions from the computer-readable storage medium, and the processor executes the computer instructions, so that the computer device performs the communication method applied to remote driving provided in the embodiments described above.

In the technical solutions provided in some embodiments of this disclosure, the PDU session parameters corresponding to the plurality of remote driving modes of the vehicle terminal are obtained, when the vehicle terminal is controlled to perform remote driving according to the PDU session parameter corresponding to the first remote driving mode, if the mode switching information transmitted by the application function entity is received, the vehicle terminal is controlled, based on the mode switching information, to switch to remote control according to the PDU session parameter corresponding to the second remote driving mode, so that the problem of switching between the remote driving modes in the remote driving process can be resolved, and further the remote driving can flexibly adapt to complex road working conditions and network conditions.

It is to be understood that the above general description and the following detailed description are exemplary and explanatory only, and are not intended to limit this disclosure.

### BRIEF DESCRIPTION OF THE DRAWINGS

The accompanying drawings which are incorporated in and constitute a part of the specification illustrate embodiments consistent with this disclosure and together with the description serve to explain the principles of this disclosure. Apparently, the drawings described below are only some embodiments of this disclosure, and other drawings may be obtained from them without creative effort for those of ordinary skill in the art. In the drawings:
FIG. 1 shows a schematic diagram of an exemplary system architecture to which a technical solution according to an embodiment of this disclosure is applicable.
FIG. 2 shows a flowchart of a communication method applied to remote driving according to some embodiments of this disclosure.
FIG. 3 shows a flowchart of a communication method applied to remote driving according to some embodiments of this disclosure.
FIG. 4 shows a flowchart of a communication method applied to remote driving according to some embodiments of this disclosure.
FIG. 5 shows a schematic diagram of a PDU session switching process when switching from an HRC mode to an MRC mode according to some embodiments of this disclosure.
FIG. 6 shows a schematic diagram of a QoS parameter switching process when switching from an HRC mode to an MRC mode according to some embodiments of this disclosure.
FIG. 7 shows a schematic diagram of QoS parameters of an HRC mode and an MRC mode according to some embodiments of this disclosure.
FIG. 8 shows a schematic diagram of QoS parameters of an HRC mode and an MRC mode according to some embodiments of this disclosure.
FIG. 9 shows a block diagram of a communication apparatus applied to remote driving according to some embodiments of this disclosure.
FIG. 10 shows a block diagram of a communication apparatus applied to remote driving according to some embodiments of this disclosure.
FIG. 11 shows a schematic structural diagram of a computer system adapted to implement an electronic device according to an embodiment of this disclosure.

### DESCRIPTION OF EMBODIMENTS

Example embodiments will now be described in a more complete manner with reference to the accompanying drawings. However exemplary embodiments can be implemented in various forms and shall not be construed as being limited to these examples; Rather these embodiments are provided to make this disclosure more comprehensive and complete and to fully convey the idea of the example embodiments to those skilled in the art.

Furthermore, the features, structures, or characteristics described herein may be incorporated in any suitable manner in one or more embodiments. In the following description there are many specific details so that the embodiments of this disclosure can be fully understood. However, it will be appreciated by those skilled in the art that all the detailed features of the embodiments may not be required, one or more specific details may be omitted, or other methods, elements, devices, steps, etc. may be employed in implementing the technical aspects of this disclosure.

The block diagrams shown in the drawings are merely functional entities and do not necessarily correspond to physically independent entities. That is, the functional entities may be implemented in software, in one or more hardware modules or integrated circuits, or in different networks and/or processor devices and/or microcontroller devices.

The flowcharts shown in the accompanying drawings are merely exemplary descriptions and do not necessarily include all of the content and operations/steps, nor are the flowcharts necessarily performed in the order described. For example, some operations/steps can also be decomposed, while others can be merged or partially merged, so the actual order of execution may be changed according to the actual situation.

The term "plurality of" mentioned in this specification means two or more. The term "and/or" describes an association relationship between associated objects, and represents that three relationships may exist, for example, A and/or B may represent that, only A exists, both A and B exist, and only B exists. The character "/" generally indicates that the related objects are an "or" relationship.

An autonomous driving technology relies on cooperation of artificial intelligence, visual computing, a radar system, a monitoring apparatus system, and a global positioning system, so that a computer can automatically and safely operate a motor vehicle without any active human operation. The autonomous driving technology usually includes high-precision maps, environment perception, behavior decision-making, path planning, motion control, and other technologies. The self-determined driving technology has a wide range of disclosure prospects.

Remote driving is a technology between autonomous driving and manual driving, and remote driving is a technology that controls a vehicle by using long distance mobile communication, which mainly includes a manual remote control (HRC) mode and a machine remote control (MRC) mode. As the name implies, HRC is manually performing remote driving, MRC is performing remote driving by a machine, and MRC belongs to autonomous driving.

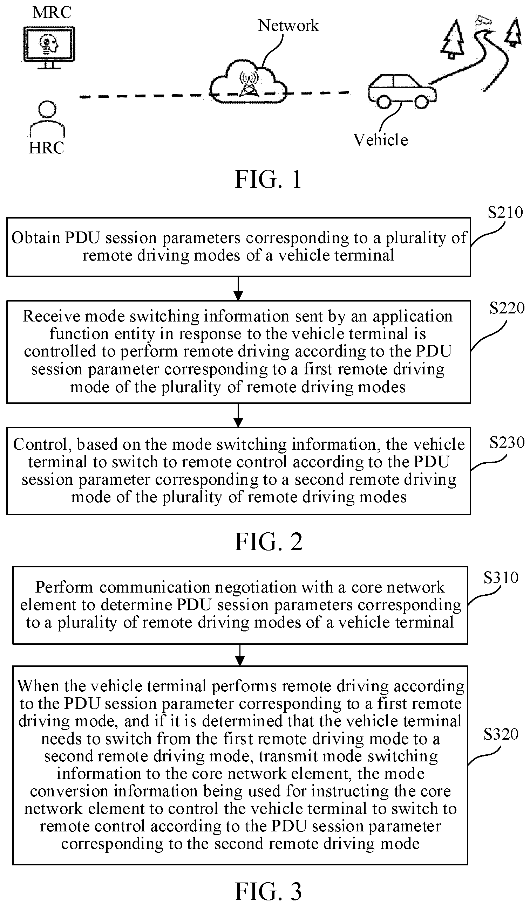

As shown in FIG. 1, in a remote driving scenario of this disclosure, there may be two remote driving modes, one is an MRC mode, and the other is an HRC mode. In the HRC mode, a driver need to obtain video information in the field of vision of a remote vehicle through a network, and therefore, higher network bandwidth is required. In the MRC mode, information on a vehicle terminal can be transmitted by using structured data or original format data, and therefore, network bandwidth occupied is lower. Downlink control instructions have similar network transmission requirements for the HRC and MRC modes.

For a 5G system, the challenge of uplink transmission is greater than that of downlink transmission, especially for 5G remote driving. Because driving safety is involved, requirements for network data transmission are higher. In addition, 5G remote driving requires high jitter characteristics of network transmission, this is because jitter may affect an algorithm design of the vehicle terminal and cloud. Based on this, in a process of controlling a vehicle in a remote driving mode, it may be necessary to switch to another remote driving mode, for example, switching from MRC to HRC or from HRC to MRC, due to the influence of a network state or road conditions.

Based on a service requirement of switching between the remote driving modes, embodiments of this disclosure provide a switching processing scheme. Specifically, a network side (such as a core network element) can obtain PDU session parameters corresponding to a plurality of remote driving modes of a vehicle terminal, for example, the PDU session parameters can be determined through communication negotiation with an application function (AF). Furthermore, when the vehicle terminal is controlled on the network side to perform remote driving according to the PDU session parameter corresponding to the first remote driving mode, if mode switching information transmitted by the AF is received, the vehicle terminal can be controlled to switch to remote control according to the PDU session parameter corresponding to the second remote driving mode based on the mode switching information.

In some embodiments, if the vehicle terminal performs remote driving in the MRC mode, and if the AF senses that the vehicle terminal is about to pass through complex road conditions and requires manual intervention, the MRC mode can be switched to the HRC mode by transmitting the mode switching information. In another example, if the vehicle terminal performs remote driving in the HRC mode, and if the AF senses that the vehicle terminal is about to pass through an area with poor network state, it can switch the HRC mode to the MRC mode by transmitting the mode switching information, so as to avoid possible driving risks caused by using the HRC mode when the network state is poor.

It can be seen that the technical solution of the embodiments of this disclosure can help address the problem of remote driving mode switching in the remote driving process, so that the remote driving can flexibly adapt to complex road working conditions and network conditions.

The implementation details of the technical scheme of the embodiments of this disclosure are described in detail below

FIG. 2 shows a flowchart of a communication method applied to remote driving according to some embodiments of this disclosure. The communication method applied to remote driving may be performed by a core network element, and the core network element may be, for example, a session management function (SMF). Referring to FIG. 2, the communication method applied to remote driving includes at least steps S210 to S230, which are described in detail as follows:

In step S210, PDU session parameters corresponding to a plurality of remote driving modes of a vehicle terminal are obtained.

In some embodiments of this disclosure, the plurality of remote driving modes include a first remote driving mode and a second remote driving mode, where the first remote driving mode may be one of the MRC mode and the HRC mode, and the second remote driving mode may be the other of the MRC mode and the HRC mode. The PDU session parameters corresponding to the remote driving modes may be determined by communication and interaction between the AF and a policy control function (PCF). In this case, the AF can communicate with PCF through a network exposure function (NEF). Alternatively, when the AF is in a trusted network environment, the AF can communicate with the PCF directly.

In some embodiments, the PDU session parameter include a QoS parameter, where the QoS parameter may include an uplink QoS parameter and a downlink QoS parameter. Uplink QoS parameters corresponding to the plurality of remote driving modes may be different. For example, for HRC and MRC, because data types and data volumes of uplink transmission are different, corresponding uplink QoS parameters are also different. However, for the downlink QoS parameter, downlink QoS parameters corresponding to the plurality of remote driving modes may be the same or different.

In step S220, when the vehicle terminal is controlled to perform remote driving according to the PDU session parameter corresponding to the first remote driving mode, the mode switching information transmitted by the application function entity is received.

In some embodiments of this disclosure, the application function entity may transmit mode switching information to the core network element when sensing that the road condition information and/or network state information of the road section traveled by the vehicle terminal has changed (or is about to change).

In some embodiments, the mode switching information transmitted by the application function entity indicates switching from a first remote driving mode to a second remote driving mode. For example, when the vehicle terminal performs remote driving in the MRC mode, if the AF senses that the vehicle terminal is about to pass through complex road conditions and needs manual intervention, it can switch the MRC mode to the HRC mode by transmitting the mode switching information. In another example, when the vehicle terminal performs remote driving in the HRC mode, if the AF senses that the vehicle terminal is about to pass through an area with poor network state, it can switch the HRC mode to the MRC mode by transmitting the mode switching information, so as to avoid possible driving risks caused by still using the HRC mode when the network state is poor.

In some embodiments of this disclosure, before receiving the mode switching information transmitted by the application function entity, the core network element can control the vehicle terminal to establish PDU sessions corresponding to a plurality of remote driving modes according to PDU session parameters corresponding to a plurality of remote driving modes respectively. According to the technical solution of the embodiment, PDU sessions corresponding to each remote driving mode can be established in advance, so that the switching of the driving mode can be realized as soon as possible when the switching of the remote driving mode is needed.

In some embodiments of this disclosure, the core network element needs to maintain the PDU session corresponding to the second remote driving mode in an active state before controlling the vehicle terminal to switch to remote control according to the PDU session parameter corresponding to the second remote driving mode, so as to reduce the time spent in switching the remote driving mode.

In some embodiments of this disclosure, when establishing a PDU session for the remote driving mode, the core network element can control the vehicle terminal to establish the same PDU session for a plurality of remote driving modes and respectively use different PDU session parameters for the plurality of remote driving modes. Alternatively, the core network element can also control the vehicle terminal to establish different PDU sessions for the plurality of remote driving modes, and use different PDU session parameters for the plurality of remote driving modes.

Continue to refer to FIG. 2 in step S230, the vehicle terminal is controlled to switch to remote control by PDU session parameter corresponding to the second remote driving mode based on the mode switching information.

In some embodiments of this disclosure, if different PDU sessions are established for the second remote driving mode and the first remote driving mode, switching processing of the PDU session is required at the time of switching, i.e. switching a PDU session for transmitting remote driving data, and adjusting corresponding PDU session parameters, etc.

In some embodiments of this disclosure, if the same PDU session is established for the second remote driving mode and the first remote driving mode, handover processing of the PDU session is not required at the time of handover, but adjustment of PDU session parameters is required.

In some embodiments of this disclosure, after controlling the vehicle terminal to switch to remote control according to the PDU session parameter corresponding to the second remote driving mode, the core network element can transmit the PDU session parameters switched by the vehicle terminal to the application function entity, and then the application function entity can transmit a remote control instruction to the vehicle terminal accordingly.

In some embodiments of this disclosure, the process of negotiating PDU session parameters corresponding to the remote driving mode between the PCF and the AF may be performed before the remote driving is performed, for example, before the core network element controls the vehicle terminal to perform remote driving according to the PDU session parameter corresponding to the first remote driving mode, the communication negotiation is performed by the AF and the PCF, and the PDU session parameter corresponding to the first remote driving mode and the second remote driving mode respectively are determined.

Of course, before the core network element controls the vehicle terminal to perform remote driving according to the PDU session parameter corresponding to the first remote driving mode, only the PDU session parameter corresponding to the first remote driving mode can be negotiated between the AF and the PCF, but the PDU session parameter corresponding to the second remote driving mode need to be negotiated between the AF and the PCF before switching, that is, in the process of performing remote driving according to the PDU session parameter corresponding to the first remote driving mode.

The technical solution of the embodiment shown in FIG. 2 is described from the perspective of core network elements, and the implementation details of the technical solution of the embodiments of this disclosure are described from the perspective of the AF with reference to FIG. 3:

FIG. 3 shows a flowchart of a communication method applied to remote driving according to some embodiments of this disclosure. The communication method applied to remote driving may be performed by an AF. Referring to FIG. 3, the communication method applied to remote driving includes at least steps S310 to S320, which are described in detail as follows:

In step S310, communication negotiation is performed with the core network element to determine PDU session parameters corresponding to a plurality of remote driving modes of a vehicle terminal.

In some embodiments of this disclosure, PDU session parameters corresponding to each remote driving mode may be determined by communication interaction between the AF and the PCF. In this case, the AF can communicate with the PCF through NEF; Alternatively, when the AF is in a trusted network environment, the AF can communicate with the PCF directly.

In some embodiments, PDU session parameters include QoS parameters. Uplink QoS parameters corresponding to the plurality of remote driving modes may be different. For example, for HRC and MRC, because data types and data volumes of uplink transmission are different, corresponding uplink QoS parameters are also different. However, for the downlink QoS parameter, downlink QoS parameters corresponding to the plurality of remote driving modes may be the same or different.

In step S320, when the vehicle terminal performs remote driving according to the PDU session parameter corresponding to the first remote driving mode among the plurality of remote driving modes, if it is determined that the vehicle terminal needs to switch from the first remote driving mode to the second remote driving mode, mode switching information is transmitted to the core network element, and the mode switching information is used for instructing the core network element to control the vehicle terminal to switch to remote control according to the PDU session parameter corresponding to the second remote driving mode.

Specifically, in the process of remote driving by the manual remote control mode at the vehicle terminal, if the AF determines that the driving section is suitable for the machine remote control mode according to the road condition information and the network state information of the driving road section at the vehicle terminal, it determines that the vehicle terminal can switch from the manual remote control mode to the machine remote control mode. For example, if the AF senses that the vehicle terminal driven by manual remote driving is about to pass through the area with poor network state, and the area is suitable for machine remote driving, it can be determined that the vehicle terminal can be switched from manual remote control mode to machine remote control mode, so as to avoid possible driving risks caused by using the HRC mode when the network state is poor.

In the process of remote driving by the machine remote control mode at the vehicle terminal, if it is determined that the driving road section is not suitable for the machine remote control mode according to the road condition information and network state information of the driving road section at the vehicle terminal, it is determined that the vehicle terminal needs to switch from the machine remote control mode to the manual remote control mode. For example, if the AF senses that the vehicle terminal driven remotely by the machine is about to pass through complex road conditions and needs manual intervention, it can be determined that the vehicle terminal can be switched from the machine remote control mode to the manual remote control mode.

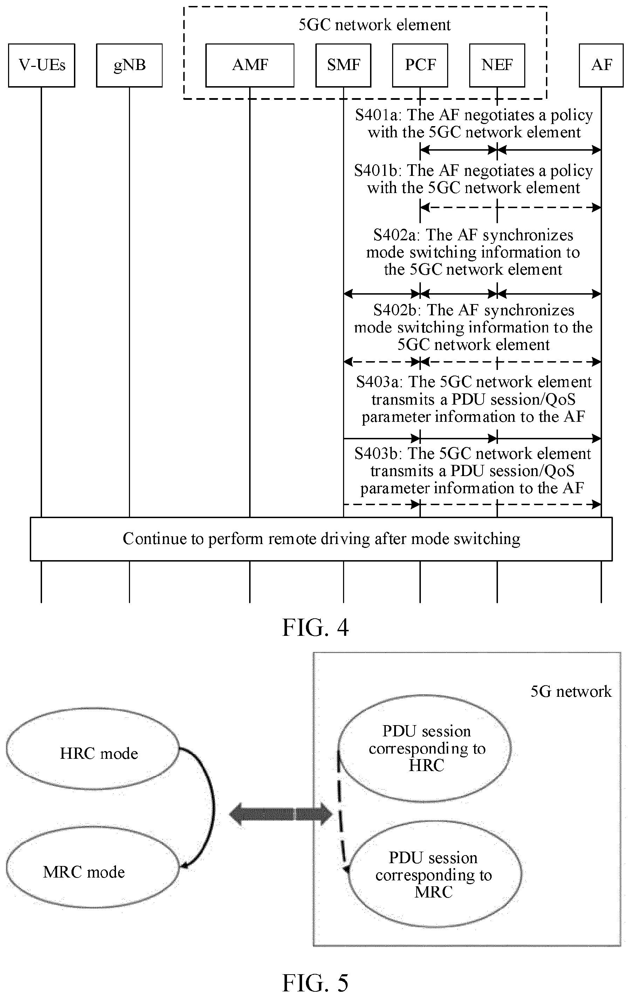

The technical scheme of the embodiments of this disclosure is described above from the perspective of the core network element and the AF respectively. Taking HRC and MRC remote driving modes as examples, the implementation details of the technical scheme of the embodiments of this disclosure are described in detail in combination with FIG. 4 to FIG. 8:

In an embodiment of this disclosure, negotiation interaction can be performed between the AF and 5G Core (5GC) network elements to negotiate PDU session parameters for two modes of remote driving application (that is, HRC and MRC).

Specifically, as shown in FIG. 4, the negotiation process between the AF and the 5GC network element may be performed through step S401a or step S401b. In step S401a, the AF can perform negotiation processing between the NEF and the PCF; In step S401b, the AF can directly negotiate with the PCF.

Considering the service requirements of remote driving, the HRC and MRC modes may be switched at any time, so it may not be possible to wait until the mode is switched before establishing a new PDU session or negotiating PDU session parameters. Instead, PDU sessions should be established for these two remote driving modes before switching, and PDU session parameters should be negotiated.

In some embodiments, the HRC and MRC may establish different PDU sessions to meet the needs of the HRC and MRC, an approach that may be appropriate for scenarios where the HRC and MRC are respectively applied to different servers (or server farms).

Of course, HRC and MRC can also establish a same PDU session, but different PDU session parameters can be set for the HRC and MRC modes, for example, a QoS profile.

In the process of remote driving, if the road condition of the road section where the vehicle travels permits and the network quality meets the corresponding driving mode requirements, the remote driving mode can be switched from HRC to MRC, or from MRC to HRC.

Specifically, as shown in FIG. 4, when mode switching is required, the mode switching information can be synchronized to the 5GC by step S402a or step S402b. In step S402a, the AF can synchronize the mode switching information with the SMF through the NEF and PCF; In step S402b, the AF can directly synchronize the mode switching information with the SMF through the PCF.

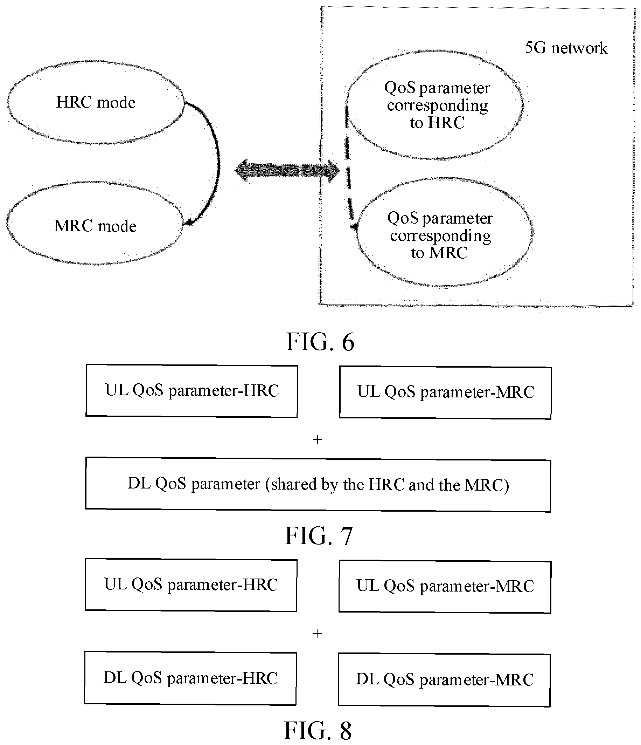

As shown in FIG. 5, when the remote driving mode is switched from the HRC mode to the MRC mode, the PDU session of the 5G network is switched from the PDU session corresponding to HRC to the PDU session corresponding to MRC. As shown in FIG. 6, when the remote driving mode is switched from the HRC mode to the MRC mode, the QoS parameters of 5G network change from the QoS parameters corresponding to HRC to the QoS parameters corresponding to MRC.

In some embodiments of this disclosure, in a manner in which the MRC mode and the HRC mode employ different PDU sessions, the PDU sessions of the MRC mode and the HRC mode are associated with a series of parameters, including but not limited to single network slice selection assistance information (S-NSSAI) in the HRC mode or the MRC mode, a data network name (DNN), QoS parameters of a radio bearer and the core network bearer corresponding to the PDU session, and the like. In addition, the vehicle terminal needs to ensure that the PDU sessions corresponding to the two remote driving modes are maintained in an active state, or need to be established and/or activated before the mode switching.

In some embodiments, the MRC mode and the HRC mode employ different QoS parameters/profiles, and the QoS parameters corresponding to each mode include, but are not limited to, bandwidth, delay, jitter, packet loss rate, and the like.

As shown in FIG. 7, the MRC mode and the HRC mode can configure separate uplink (UL) QoS parameters, but share the same downlink (DL) QoS parameters. Alternatively, as shown in FIG. 8, the MRC mode and the HRC mode can not only configure independent UL QoS parameters, but also share the same DL QoS parameters.

Continue to refer to FIG. 4, after performing the mode switching, the core network element may transmit the switched PDU session/QoS parameter information to the AF through step S403a or step S403b. In step S403a, the SMF transmits the switched PDU session/QoS parameter information to the AF through the PCF and the NEF; In step S403b, the SMF directly transmits the switched PDU session/QoS parameter information to the AF through the PCF. After the mode is switched, remote driving can be continued based on the switched remote driving mode.

To sum up, the technical scheme of the embodiments of this disclosure can resolve the adaptation problem of 5G network characteristics when the mode switching of remote driving occurs, so that the 5G remote driving scheme can flexibly adapt to complex road conditions and network conditions.

Embodiments of the apparatus of this disclosure are described below, which may be used to perform the communication method applied to remote driving in the above-described embodiments of this disclosure. For details not disclosed in the embodiment of the apparatus of this disclosure, please refer to the above embodiment of the communication method applied to remote driving of this disclosure.

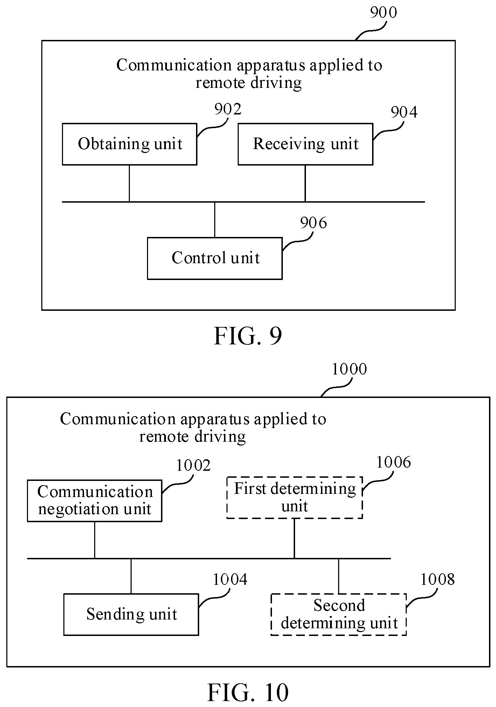

FIG. 9 shows a block diagram of a communication apparatus applied to remote driving according to some embodiments of this disclosure. The communication apparatus applied to remote driving may be configured in a core network element, and the core network element may be, for example, an SMF.

Referring to FIG. 9, a communication apparatus 900 applied to remote driving according to some embodiments of this disclosure includes: an obtaining unit 902, a receiving unit 904, and a control unit 906.

The obtaining unit 902 is configured to obtain PDU session parameters corresponding to a plurality of remote driving modes of a vehicle terminal, the plurality of remote driving modes including a first remote driving mode and a second remote driving mode; the receiving unit 904 is configured to receive mode switching information transmitted by the application function entity when the vehicle terminal is remotely controlled according to the PDU session parameter corresponding to the first remote driving mode, the mode switching information being used for instructing to switch from the first remote driving mode to the second remote driving mode; and the control unit 906 is configured to control, based on the mode switching information, the vehicle terminal to switch to remote control according to the PDU session parameter corresponding to the second remote driving mode.

In some embodiments of this disclosure, based on the foregoing solution, the control unit 906 is further configured to: before receiving the mode switching information transmitted by the application function entity, control the vehicle terminal to establish PDU sessions corresponding to the plurality of remote driving modes based on the PDU session parameters respectively corresponding to the plurality of remote driving modes.

In some embodiments of this disclosure, based on the foregoing solution, the control unit 906 is further configured to: maintain a PDU session corresponding to the second remote driving mode in an active state before controlling the vehicle terminal to switch to remote control according to the PDU session parameter corresponding to the second remote driving mode.

In some embodiments of this disclosure, based on the foregoing solution, the control unit 906 is configured to: control the vehicle terminal to establish a same PDU session for the plurality of remote driving modes and respectively use different PDU session parameters for the plurality of remote driving modes.

In some embodiments of this disclosure, based on the foregoing solution, the control unit 906 is configured to: control the vehicle terminal to respectively establish different PDU sessions for the plurality of remote driving modes and respectively use different PDU session parameters for the plurality of remote driving modes.

In some embodiments of this disclosure, based on the foregoing solution, the PDU session parameter includes a QoS parameter; the QoS parameter includes an uplink QoS parameter and a downlink QoS parameters;
uplink QoS parameters corresponding to the plurality of remote driving modes are different; and
downlink QoS parameters corresponding to the plurality of remote driving modes are the same or different.

In some embodiments of this disclosure, based on the foregoing solution, the control unit 906 is further configured to: after controlling the vehicle terminal to switch to remote control according to the PDU session parameter corresponding to the second remote driving mode, transmit the PDU session parameters switched by the vehicle terminal to the application function entity, where the application function entity transmits a remote control instruction to the vehicle terminal based on the received PDU session parameter.

In some embodiments of this disclosure, based on the foregoing solution, the PDU session parameters corresponding to the first remote driving mode and the second remote driving mode are respectively determined by the policy control function entity and the application function entity through communication negotiation before the vehicle terminal is remotely controlled according to the PDU session parameter corresponding to the first remote driving mode; or
the PDU session parameter corresponding to the first remote driving mode is determined by performing communication negotiation between a policy control function entity and the application function entity before the vehicle terminal is controlled to perform remote driving according to the PDU session parameter corresponding to the first remote driving mode, and the PDU session parameter corresponding to the second remote driving mode is determined by performing communication negotiation between the policy control function entity and the application function entity while the vehicle terminal is controlled to perform remote driving according to the PDU session parameter corresponding to the first remote driving mode.

FIG. 10 shows a block diagram of a communication apparatus applied to remote driving according to some embodiments of this disclosure. The communication apparatus applied to remote driving may be configured in the AF.

Referring to FIG. 10, a communication apparatus 1000 applied to remote driving according to some embodiments of this disclosure includes: a communication negotiation unit 1002 and a transmitting unit 1004.

The communication negotiation unit 1002 is configured to perform communication negotiation with the core network elements to determine PDU session parameters corresponding to a plurality of remote driving modes of a vehicle terminal. The plurality of remote driving modes includes a first remote driving mode and a second remote driving mode. The transmitting unit 1004 is configured to transmit mode switching information to the core network element if it is determined that the vehicle terminal needs to switch from the first remote driving mode to the second remote driving mode when the vehicle terminal performs remote driving according to the PDU session parameter corresponding to the first remote driving mode, and the mode switching information is used for instructing the core network element to control the vehicle terminal to switch to remote control according to the PDU session parameter corresponding to the second remote driving mode.

In some embodiments of this disclosure, the first remote driving mode is any one of a machine remote control mode and a manual remote control mode, and the second remote driving mode is the other of the machine remote control mode and the manual remote control mode based on the foregoing scheme. The communication apparatus 1000 further includes:
a first determining unit 1006, configured to, while the vehicle terminal performs remote driving in the manual remote control mode, and if it is determined based on road condition information and network state information of a driving road section of the vehicle terminal, that the driving road section is suitable for the machine remote control mode, determining that the vehicle terminal is capable of switching from the manual remote control mode to the machine remote control mode.

In some embodiments of this disclosure, the first remote driving mode is any one of a machine remote control mode and a manual remote control mode, and the second remote driving mode is the other of the machine remote control mode and the manual remote control mode based on the foregoing scheme. The communication apparatus 1000 further includes:
a second determining unit 1008, configured to, while the vehicle terminal performs remote driving in the machine remote control mode, and if it is determined, based on road condition information and network state information of a driving road section of the vehicle terminal, that the driving road section is not suitable for the machine remote control mode, determining that the vehicle terminal needs to switch from the machine remote control mode to the manual remote control mode.

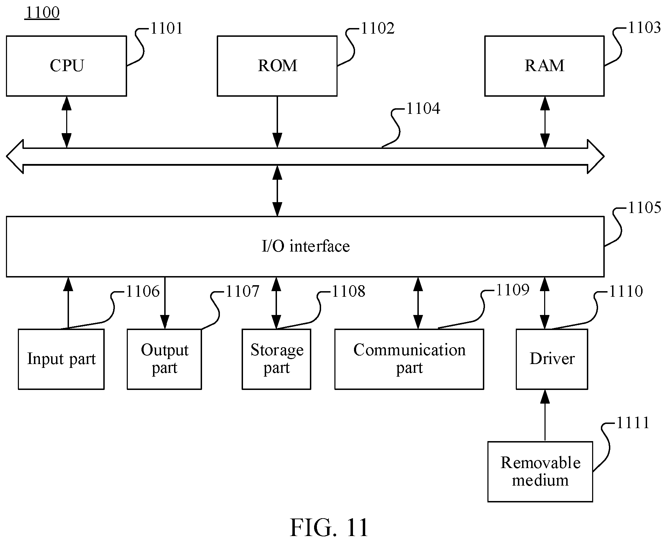

FIG. 11 shows a schematic structural diagram of a computer system adapted to implement an electronic device according to an embodiment of this disclosure.

The computer system 1100 of an electronic device shown in FIG. 11 is only one example and does not constitute any limitation on the function and scope of use of the embodiments of this disclosure.

As shown in FIG. 11, the computer system 1100 includes a central processing unit (CPU) 1101 that can perform various appropriate actions and processes according to a program stored in a read-only memory (ROM) 1102 or a program loaded into a random access memory (RAM) 1103 from a storage section 1108, such as performing the methods described in the above-described embodiments. The RAM 1103 further stores various programs and data required for system operations. The CPU 1101, the ROM 1102, and the RAM 1103 are connected to each other through a bus 1104. An input/output (I/O) interface 1105 is also connected to the bus 1104.

The following components are connected to the I/O interface 1105: an input section 1106 including a keyboard a mouse and the like; an output section 1107 including a cathode ray tube (CRT), a liquid crystal display (LCD), and the like, and a speaker; a storage section 1108 including a hard disk or the like; and a communication section 1109 including a network interface card such as a local area network (LAN) card a modem and the like. The communication portion 1109 performs communication processing by using a network such as the Internet. A driver 1110 is also connected to the I/O interface 1105 as required. A removable medium 1111, such as a magnetic disk, an optical disc, a magneto-optical disk, or a semiconductor memory, is installed on the driver 1110 as required, so that a computer program read from the removable medium is installed into the storage part 1108 as required.

In particular, according to the embodiments of this disclosure, the process described above with reference to the flowchart may be implemented as a computer software program. For example, an embodiment of this disclosure provides a computer program product, including a computer program carried on a computer-readable medium, where the computer program includes a computer program for performing the method shown in the flowchart. In such an embodiment, the computer program may be downloaded and installed from the network through the communication section 1109 and/or installed from the removable medium 1111. When the computer program is executed by a central processing unit (CPU) 1101 various functions defined in the system of this disclosure are performed.

The computer-readable medium shown in embodiments of this disclosure may be a computer-readable signal medium or a computer-readable storage medium or any combination of the above. The computer-readable storage medium may be, for example, but is not limited to, an electric, magnetic, optical, electromagnetic, infrared, or semi-conductive system, apparatus, or component, or any combination thereof. More specific examples of the computer readable storage medium may include, but are not limited to: a portable computer disk, a hard disk, a random access memory (RAM), a read-only memory (ROM), an erasable programmable read only memory (EPROM), a flash memory, an optical fiber, a portable compact disc read-only memory (CD-ROM), an optical memory device, a magnetic memory device, or any suitable combination of the above. In this disclosure, the computer-readable storage medium may be any tangible medium including or storing a program that may be used by or used in combination with an instruction execution system, apparatus, or device. In this disclosure, the computer-readable signal medium may include a data signal propagated in the baseband or as part of a carrier wave, in which a computer-readable computer program is carried. The data signal propagated in such a way may assume a plurality of forms, including, but not limited to, an electromagnetic signal, an optical signal, or any appropriate combination thereof. The computer-readable signal medium may also be any computer-readable medium other than a computer-readable storage medium that may transmit, propagate, or transmit a program for use by or in conjunction with an instruction execution system, apparatus, or device. The computer program included in the readable storage medium may be transmitted using any suitable medium, including but not limited to: wireless, wired, etc., or any suitable combination of the above.

The flowcharts and block diagrams in the accompanying drawings illustrate possible system architectures, functions and operations that may be implemented by a system, a method, and a computer program product according to various embodiments of this disclosure. Each box in a flowchart or a block diagram may represent a module, a program segment, or a part of code. The module, the program segment, or the part of code includes one or more executable instructions used for implementing specified logic functions. In some alternative implementations the functions indicated in the boxes may also occur in a different order than those indicated in the drawings. For example, two blocks represented in succession can actually be executed substantially in parallel or they can sometimes be executed in reverse order depending on the functionality involved. Each box in a block diagram or a flowchart and a combination of boxes in the block diagram or the flowchart may be implemented by using a dedicated hardware-based system configured to perform a designated function or operation, or may be implemented by using a combination of dedicated hardware and a computer instruction.

The unit described in the embodiments of this disclosure may be implemented by software or hardware, and the described unit may also be arranged in a processor. Names of the units do not constitute a limitation on the units in a specific case.

In another aspect, this disclosure further provides a computer readable medium. The computer readable medium may be included in the electronic device described in the above embodiments, or may exist alone without being assembled into the electronic device. The computer-readable medium carries one or more programs, the one or more programs, when executed by the electronic device, causing the electronic device to implement the method described in the foregoing embodiments.

Although several modules or units of the apparatus for action execution are mentioned in the above detailed description, this division is not mandatory. Actually, according to the implementations of this disclosure, the features and functions of two or more modules or units described above may be specified in one module or unit. Conversely, the features and functions of one module or unit described above may be further divided to be embodied by a plurality of modules or units.

According to the foregoing descriptions of the implementations, a person skilled in the art may readily understand that the exemplary implementations described herein may be implemented by using software, or may be implemented by combining software and necessary hardware. Therefore, the technical solutions of the embodiments of this disclosure may be implemented in a form of a software product. The software product may be stored in a non-volatile storage medium (which may be a CD-ROM, a USB flash drive, a removable hard disk, or the like) or on the network, including several instructions for instructing a computing device (which may be a personal computer, a server, a touch terminal, a network device, or the like) to perform the methods according to the embodiments of this disclosure.

After considering the specification and practicing the disclosed implementations, a person skilled in the art may easily conceive of other implementations of this disclosure. This disclosure is intended to cover any variations, uses, or adaptive changes of this disclosure following the general principles of this disclosure, and includes well-known knowledge and conventional technical means in the art and undisclosed in this disclosure.

This disclosure is not limited to the accurate structures that are described above and that are shown in the accompanying drawings, and modifications and changes may be made without departing from the scope of this disclosure. The scope of this disclosure is limited only by the appended claims.

## Claims

1. A method for remotely controlling a vehicle terminal performed by a session management function entity, **characterized by** comprising:
obtaining (S210), by the session management function entity, PDU session parameters corresponding to a plurality of remote control modes of a vehicle terminal, the plurality of remote control modes comprising a first remote control mode and a second remote control mode;
receiving (S220), by the session management function entity while the vehicle terminal is controlled according to the PDU session parameter corresponding to the first remote control mode, mode switching information from an application function entity, the mode switching information indicating the first remote control mode is to be switched to the second remote control mode; and
controlling (S230), by the session management function entity based on the mode switching information, the vehicle terminal to switch to remote control according to the PDU session parameter corresponding to the second remote control mode.

2. The method according to claim 1, wherein before receiving the mode switching information from the application function entity, the method further comprises:
controlling the vehicle terminal to establish PDU sessions respectively corresponding to the plurality of remote control modes based on the PDU session parameters respectively corresponding to the plurality of remote control modes.

3. The method according to claim 2, further comprising:
maintaining the PDU session corresponding to the second remote control mode in an active state before the vehicle terminal is controlled to switch to remote control according to the PDU session parameter corresponding to the second remote control mode.

4. The method according to claim 2, wherein the controlling the vehicle terminal to establish PDU sessions respectively corresponding to the plurality of remote control modes based on the PDU session parameters respectively corresponding to the plurality of remote control modes comprises:
controlling the vehicle terminal to establish a same PDU session for the plurality of remote control modes and respectively use different PDU session parameters for the plurality of remote control modes.

5. The method according to claim 2, wherein the controlling the vehicle terminal to establish PDU sessions respectively corresponding to the plurality of remote control modes based on the PDU session parameters corresponding to the plurality of remote control modes comprises:
controlling the vehicle terminal to establish different PDU sessions for the plurality of remote control modes and respectively use different PDU session parameters for the plurality of remote control modes.

6. The method according to any one of claims 1 to 5, wherein the PDU session parameter comprises a quality of service QoS parameter; the QoS parameter comprises an uplink QoS parameter and a downlink QoS parameters; and
the uplink QoS parameters corresponding to the plurality of remote control modes are different.

7. The method according to any one of claims 1 to 5, further comprising:
transmitting the PDU session parameters for the switch by the vehicle terminal to the application function entity after the vehicle terminal is controlled to switch to remote control according to the PDU session parameter corresponding to the second remote control mode, wherein the application function entity transmits a remote control instruction to the vehicle terminal based on the received PDU session parameter.

8. The method according to any one of claims 1 to 5, wherein
the PDU session parameters corresponding to the first remote control mode and the second remote control mode are respectively determined by a policy control function entity and the application function entity through communication negotiation before the vehicle terminal is controlled to perform remote driving according to the PDU session parameter corresponding to the first remote control mode.

9. The method according to any one of claims 1 to 5, wherein
the PDU session parameter corresponding to the first remote control mode is determined by performing communication negotiation between a policy control function entity and the application function entity before the vehicle terminal is controlled to perform remote driving according to the PDU session parameter corresponding to the first remote control mode, and the PDU session parameter corresponding to the second remote control mode is determined by performing communication negotiation between the policy control function entity and the application function entity while the vehicle terminal is controlled to perform remote driving according to the PDU session parameter corresponding to the first remote control mode.

10. A method for remotely controlling a vehicle terminal performed by an application function entity, **characterized by** comprising:
performing (S310), by the application function entity, communication negotiation with a core network element to determine PDU session parameters corresponding to a plurality of remote control modes of a vehicle terminal, the plurality of remote control modes comprising a first remote control mode and a second remote control mode; and
transmitting (S320), by the application function entity while the vehicle terminal performs remote driving according to the PDU session parameter corresponding to the first remote control mode, mode switching information to the core network element when the vehicle terminal is to switch from the first remote control mode to the second remote control mode, the mode switching information indicating the core network element that the vehicle terminal is to switch to remote control according to the PDU session parameter corresponding to the second remote control mode.

11. The method according to claim 10, wherein the first remote control mode is any one of a machine remote control mode and a manual remote control mode, and the second remote control mode is the other of the machine remote control mode and the manual remote control mode; and the communication method further comprises:
while the vehicle terminal performs remote driving in the manual remote control mode, determining, based on road condition information and network state information of a driving road segment of the vehicle terminal, that the vehicle terminal is to switch from the manual remote control mode to the machine remote control mode.

12. The method according to claim 10, wherein the first remote control mode is any one of a machine remote control mode and a manual remote control mode, and the second remote control mode is the other of the machine remote control mode and the manual remote control mode; and the communication method further comprises:
while the vehicle terminal performs remote driving in the machine remote control mode, determining, based on road condition information and network state information of a driving road segment of the vehicle terminal, that the vehicle terminal is to switch from the machine remote control mode to the manual remote control mode.

13. A computer-readable medium, storing a computer program, the computer program, when executed by a processor, implementing the method according to any one of claims 1 to 9, or implementing the method according to any one of claims 10 to 12.

14. An electronic device, comprising:
one or more processors; and
a storage apparatus, configured to store one or more programs, the one or more programs, when executed by the one or more processors, causing the one or more processors to implement the method as claimed in any one of claims 1 to 9, or to implement the method as claimed in any one of claims 10 to 12.

15. A computer program product, comprising computer instructions stored in a computer-readable storage medium, the computer instructions, when executed, implementing the method according to any one of claims 1 to 9, or implementing the method according to any one of claims 10 to 12.

## Patentansprüche

1. Verfahren zum Fernsteuern eines Fahrzeugendgeräts, das von einer Sitzungsverwaltungsfunktionsentität durchgeführt wird, **dadurch gekennzeichnet, dass** es Folgendes umfasst:
Erhalten (S210) von PDU-Sitzungsparametern, die einer Vielzahl von Fernsteuermodi eines Fahrzeugendgeräts entsprechen, durch die Sitzungsverwaltungsfunktionsentität, wobei die Vielzahl von Fernsteuermodi einen ersten Fernsteuermodus und einen zweiten Fernsteuermodus umfasst;
Empfangen (S220) von Modusumschaltinformationen durch die Sitzungsverwaltungsfunktionsentität, während das Fahrzeugendgerät gemäß dem PDU-Sitzungsparameter gesteuert wird, der dem ersten Fernsteuermodus entspricht, von einer Anwendungsfunktionsentität, wobei die Modusumschaltinformationen anzeigen, dass der erste Fernsteuermodus in den zweiten Fernsteuermodus umzuschalten ist; und
Steuern (S230) des Fahrzeugendgeräts zum Umschalten der Fernsteuerung gemäß dem PDU-Sitzungsparameter, der dem zweiten Fernsteuermodus entspricht, durch die Sitzungsverwaltungsfunktionsentität auf Basis der Modusumschaltinformationen.

2. Verfahren nach Anspruch 1, wobei das Verfahren vor dem Empfangen der Modusumschaltinformationen von der Anwendungsfunktionsentität ferner Folgendes umfasst:
Steuern des Fahrzeugendgeräts zum Aufbauen von PDU-Sitzungen, die jeweils der Vielzahl von Fernsteuermodi entsprechen, auf Basis der PDU-Sitzungsparameter, die jeweils der Vielzahl von Fernsteuermodi entsprechen.

3. Verfahren nach Anspruch 2, das ferner Folgendes umfasst:
Aufrechterhalten der PDU-Sitzung, die dem zweiten Fernsteuermodus entspricht, in einem aktiven Zustand, bevor das Fahrzeugendgerät zum Umschalten auf eine Fernsteuerung gemäß dem PDU-Sitzungsparameter, der dem zweiten Fernsteuermodus entspricht, gesteuert wird.

4. Verfahren nach Anspruch 2, wobei das Steuern des Fahrzeugendgeräts zum Aufbauen von PDU-Sitzungen, die jeweils der Vielzahl von Fernsteuermodi entsprechen, auf Basis der PDU-Sitzungsparameter, die jeweils der Vielzahl von Fernsteuermodi entsprechen, Folgendes umfasst:
Steuern des Fahrzeugendgeräts zum Aufbauen einer selben PDU-Sitzung für die Vielzahl von Fernsteuermodi und zum jeweiligen Verwenden von anderen PDU-Sitzungsparametern für die Vielzahl von Fernsteuermodi.

5. Verfahren nach Anspruch 2, wobei das Steuern des Fahrzeugendgeräts zum Aufbauen von PDU-Sitzungen, die jeweils der Vielzahl von Fernsteuermodi entsprechen, auf Basis der PDU-Sitzungsparameter, die der Vielzahl von Fernsteuermodi entsprechen, Folgendes umfasst:
Steuern des Fahrzeugendgeräts zum Aufbauen von anderen PDU-Sitzungen für die Vielzahl von Fernsteuermodi und zum jeweiligen Verwenden von anderen PDU-Sitzungsparametern für die Vielzahl von Fernsteuermodi.

6. Verfahren nach einem der Ansprüche 1 bis 5, wobei der PDU-Sitzungsparameter einen Dienstqualitäts(QoS)-Parameter umfasst, wobei der QoS-Parameter einen Uplink-QoS-Parameter und einen Downlink-QoS-Parameter umfasst; und
die Uplink-QoS-Parameter, die der Vielzahl von Fernsteuermodi entsprechen unterscheiden sich.

7. Verfahren nach einem der Ansprüche 1 bis 5, das ferner Folgendes umfasst:
Übertragen der PDU-Sitzungsparameter für die Umschaltung durch das Fahrzeugendgerät zur Anwendungsfunktionsentität, nachdem das Fahrzeugendgerät zum Umschalten auf Fernsteuerung gemäß dem PDU-Sitzungsparameter gesteuert wurde, der dem zweiten Fernsteuermodus entspricht, wobei die Anwendungsfunktionsentität eine Fernsteueranweisung auf Basis des empfangenen PDU-Sitzungsparameters zum Fahrzeugendgerät überträgt.

8. Verfahren nach einem der Ansprüche 1 bis 5, wobei
die PDU-Sitzungsparameter, die dem ersten Fernsteuermodus und dem zweiten Fernsteuermodus entsprechen, mittels Kommunikationsverhandlung durch eine Richtliniensteuerfunktionsentität und die Anwendungsfunktionsentität bestimmt werden, bevor das Fahrzeugendgerät zum Durchführen einer Fernsteuerung gemäß dem PDU-Sitzungsparameter, der dem ersten Fernsteuermodus entspricht, gesteuert wird.

9. Verfahren nach einem der Ansprüche 1 bis 5, wobei
der PDU-Sitzungsparameter, der dem ersten Fernsteuermodus entspricht, durch Durchführen einer Kommunikationsverhandlung zwischen einer Richtliniensteuerfunktionsentität und der Anwendungsfunktionsentität bestimmt wird, bevor das Fahrzeugendgerät zum Durchführen einer Fernsteuerung gemäß dem PDU-Sitzungsparameter gesteuert wird, der dem ersten Fernsteuermodus entspricht, und der PDU-Sitzungsparameter, der dem zweiten Fernsteuermodus entspricht, durch Durchführen einer Kommunikationsverhandlung zwischen der Richtliniensteuerfunktionsentität und der Anwendungsfunktionsentität bestimmt wird, während das Fahrzeugendgerät zum Durchführen einer Fernsteuerung gemäß dem PDU-Sitzungsparameter gesteuert wird, der dem ersten Fernsteuermodus entspricht.

10. Verfahren zum Fernsteuern eines Fahrzeugendgeräts, das von einer Anwendungsfunktionsentität durchgeführt wird, **dadurch gekennzeichnet, dass** es Folgendes umfasst:
Durchführen (S310) einer Kommunikationsverhandlung durch die Anwendungsfunktionsentität mit einem Kernnetzwerkelement, um PDU-Sitzungsparameter zu bestimmen, die einer Vielzahl von Fernsteuermodi eines Fahrzeugendgeräts entsprechen, wobei die Vielzahl von Fernsteuermodi einen ersten Fernsteuermodus und einen zweiten Fernsteuermodus umfasst; und
Übertragen (S320) von Modusumschaltinformationen durch die Anwendungsfunktionsentität, während das Fahrzeugendgerät eine Fernsteuerung gemäß dem PDU-Sitzungsparameter durchführt, der dem ersten Fernsteuermodus entspricht, zum Kernnetzwerkelement, wenn das Fahrzeugendgerät vom ersten Fernsteuermodus in den zweiten Fernsteuermodus umschalten soll, wobei die Modusumschaltinformationen dem Kernnetzwerkelement anzeigen, dass das Fahrzeugendgerät gemäß dem PDU-Sitzungsparameter, der dem zweiten Fernsteuermodus entspricht, auf Fernsteuerung umschalten soll.

11. Verfahren nach Anspruch 10, wobei der erste Fernsteuermodus einer von einem Maschinenfernsteuermodus und einem manuellen Fernsteuermodus ist und der zweite Fernsteuermodus der andere des Maschinenfernsteuermodus und des manuellen Fernsteuermodus ist; und das Kommunikationsverfahren ferner Folgendes umfasst:
während das Fahrzeugendgerät eine Fernsteuerung im manuellen Fernsteuermodus durchführt, Bestimmen auf Basis von Straßenzustandsinformationen und Netzwerkstatusinformationen eines Fahrstraßensegments des Fahrzeugendgeräts, dass das Fahrzeugendgerät vom manuellen Fernsteuermodus zum Maschinenfernsteuermodus umschalten soll.

12. Verfahren nach Anspruch 10, wobei der erste Fernsteuermodus einer von einem Maschinenfernsteuermodus und einem manuellen Fernsteuermodus ist und der zweite Fernsteuermodus der andere des Maschinenfernsteuermodus und des manuellen Fernsteuermodus ist; und das Kommunikationsverfahren ferner Folgendes umfasst:
während das Fahrzeugendgerät eine Fernsteuerung im Maschinenfernsteuermodus durchführt, Bestimmen auf Basis von Straßenzustandsinformationen und Netzwerkstatusinformationen eines Fahrstraßensegments des Fahrzeugendgeräts, dass das Fahrzeugendgerät vom Maschinenfernsteuermodus zum manuellen Fernsteuermodus umschalten soll.

13. Computerlesbares Medium, auf dem ein Computerprogramm gespeichert ist, wobei das Computerprogramm, wenn es von einem Prozessor ausgeführt wird, das Verfahren nach einem der Ansprüche 1 bis 9 implementiert oder das Verfahren nach einem der Ansprüche 10 bis 12 implementiert.

14. Elektronische Vorrichtung, die Folgendes umfasst:
einen oder mehrere Prozessoren; und
eine Speichereinrichtung, die dazu ausgelegt ist, ein oder mehrere Programme zu speichern, wobei das eine oder die mehreren Programme, wenn sie von dem einen oder den mehreren Prozessoren ausgeführt werden, den einen oder die mehreren Prozessoren veranlassen, das wie in einem der Ansprüche 1 bis 9 beanspruchte Verfahren zu implementieren oder das wie in einem der Ansprüche 10 bis 12 beanspruchte Verfahren zu implementieren.

15. Computerprogrammprodukt, das Computeranweisungen umfasst, die in einem computerlesbaren Speichermedium gespeichert sind, wobei die Computeranweisungen, wenn sie ausgeführt werden, das Verfahren nach einem der Ansprüche 1 bis 9 implementieren oder das Verfahren nach einem der Ansprüche 10 bis 12 implementieren.

## Revendications

1. Procédé pour commander à distance un terminal de véhicule réalisé par une entité de fonction de gestion de session, **caractérisé en ce qu'**il comprend :
par l'entité de fonction de gestion de session, l'obtention (S210) de paramètres de session PDU correspondant à une pluralité de modes de commande à distance d'un terminal de véhicule, la pluralité de modes de commande à distance comprenant un premier mode de commande à distance et un deuxième mode de commande à distance ;
par l'entité de fonction de gestion de session, pendant la commande du terminal de véhicule selon le paramètre de session PDU correspondant au premier mode de commande à distance, la réception (S220) d'informations de commutation de mode d'une entité de fonction d'application, les informations de commutation de mode indiquant que le premier mode de commande à distance doit être commuté sur le deuxième mode de commande à distance ; et
par l'entité de fonction de gestion de session, sur la base des informations de commutation de mode, la commande (S230) du terminal de véhicule pour commuter sur une commande à distance selon le paramètre de session PDU correspondant au deuxième mode de commande à distance.

2. Procédé selon la revendication 1, dans lequel, avant de recevoir les informations de commutation de mode de l'entité de fonction d'application, le procédé comprend en outre :
la commande du terminal de véhicule pour établir des sessions PDU correspondant respectivement à la pluralité de modes de commande à distance sur la base des paramètres de session PDU correspondant respectivement à la pluralité de modes de commande à distance.

3. Procédé selon la revendication 2, comprenant en outre :
le maintien de la session PDU correspondant au deuxième mode de commande à distance dans un état actif avant la commande du terminal de véhicule pour commuter sur une commande à distance selon le paramètre de session PDU correspondant au deuxième mode de commande à distance.

4. Procédé selon la revendication 2, dans lequel la commande du terminal de véhicule pour établir des sessions PDU correspondant respectivement à la pluralité de modes de commande à distance sur la base des paramètres de session PDU correspondant respectivement à la pluralité de modes de commande à distance comprend :
la commande du terminal de véhicule pour établir une même session PDU pour la pluralité de modes de commande à distance et l'utilisation respective de paramètres de session PDU différents pour la pluralité de modes de commande à distance.

5. Procédé selon la revendication 2, dans lequel la commande du terminal de véhicule pour établir des sessions PDU correspondant respectivement à la pluralité de modes de commande à distance sur la base des paramètres de session PDU correspondant à la pluralité de modes de commande à distance comprend :
la commande du terminal de véhicule pour établir des sessions PDU différentes pour la pluralité de modes de commande à distance et l'utilisation respective de paramètres de session PDU différents pour la pluralité de modes de commande à distance.

6. Procédé selon l'une des revendications 1 à 5, dans lequel le paramètre de session PDU comprend un paramètre de qualité de service QoS ; le paramètre QoS comprend un paramètre QoS de liaison montante et un paramètre QoS de liaison descendante ; et
les paramètres QoS de liaison montante correspondant à la pluralité de modes de commande à distance sont différents.

7. Procédé selon l'une des revendications 1 à 5, comprenant en outre :
la transmission à l'entité de fonction d'application des paramètres de session PDU pour la commutation par le terminal de véhicule après la commande du terminal de véhicule pour commuter sur une commande à distance selon le paramètre de session PDU correspondant au deuxième mode de commande à distance, dans lequel l'entité de fonction d'application transmet une instruction de commande à distance au terminal de véhicule sur la base du paramètre de session PDU reçu.

8. Procédé selon l'une des revendications 1 à 5, dans lequel
les paramètres de session PDU correspondant au premier mode de commande à distance et au deuxième mode de commande à distance sont respectivement déterminés par une entité de fonction de commande de politique et par l'entité de fonction d'application via une négociation de communication avant la commande du terminal de véhicule pour effectuer une conduite à distance selon le paramètre de session PDU correspondant au premier mode de commande à distance.

9. Procédé selon l'une des revendications 1 à 5, dans lequel
le paramètre de session PDU correspondant au premier mode de commande à distance est déterminé en effectuant une négociation de communication entre une entité de fonction de commande de politique et l'entité de fonction d'application avant la commande du terminal de véhicule pour effectuer une conduite à distance selon le paramètre de session PDU correspondant au premier mode de commande à distance, et le paramètre de session PDU correspondant au deuxième mode de commande à distance est déterminé en effectuant une négociation de communication entre l'entité de fonction de commande de politique et l'entité de fonction d'application pendant la commande du terminal de véhicule pour effectuer une conduite à distance selon le paramètre de session PDU correspondant au premier mode de commande à distance.

10. Procédé pour commander à distance un terminal de véhicule réalisé par une entité de fonction d'application, **caractérisé en ce qu'**il comprend :
par l'entité de fonction d'application, la réalisation (S310) d'une négociation de communication avec un élément de réseau central pour déterminer des paramètres de session PDU correspondant à une pluralité de modes de commande à distance d'un terminal de véhicule, la pluralité de modes de commande à distance comprenant un premier mode de commande à distance et un deuxième mode de commande à distance ; et
par l'entité de fonction d'application, tandis que le terminal de véhicule effectue une conduite à distance selon le paramètre de session PDU correspondant au premier mode de commande à distance, la transmission (S320) d'informations de commutation de mode à l'élément de réseau central lorsque le terminal de véhicule doit commuter du premier mode de commande à distance au deuxième mode de commande à distance, les informations de commutation de mode indiquant à l'élément de réseau central que le terminal de véhicule doit commuter sur une commande à distance selon le paramètre de session PDU correspondant au deuxième mode de commande à distance.

11. Procédé selon la revendication 10, dans lequel le premier mode de commande à distance est l'un parmi un mode de commande à distance machine et un mode de commande à distance manuel, et le deuxième mode de commande à distance est l'autre parmi le mode de commande à distance machine et le mode de commande à distance manuel ; et le procédé de communication comprend en outre :
tandis que le terminal de véhicule effectue une conduite à distance en mode de commande à distance manuel, sur la base d'informations de condition la route et d'informations d'état de réseau d'un segment de route de conduite du terminal de véhicule, la détermination de la nécessité de la commutation du terminal de véhicule du mode de commande à distance manuel au mode de commande à distance machine.

12. Procédé selon la revendication 10, dans lequel le premier mode de commande à distance est l'un parmi un mode de commande à distance machine et un mode de commande à distance manuel, et le deuxième mode de commande à distance est l'autre parmi le mode de commande à distance machine et le mode de commande à distance manuel ; et le procédé de communication comprend en outre :
tandis que le terminal de véhicule effectue une conduite à distance en mode de commande à distance machine, sur la base d'informations de condition la route et d'informations d'état de réseau d'un segment de route de conduite du terminal de véhicule, la détermination de la nécessité de la commutation du terminal de véhicule du mode de commande à distance machine au mode de commande à distance manuel.

13. Support lisible par ordinateur stockant un programme informatique, le programme informatique, lorsqu'il est exécuté par un processeur, mettant en œuvre le procédé selon l'une des revendications 1 à 9, ou mettant en œuvre le procédé selon l'une des revendications 10 à 12.

14. Dispositif électronique, comprenant :
un ou plusieurs processeurs ; et
un appareil de stockage configuré pour stocker un ou plusieurs programmes, les un ou plusieurs programmes, lorsqu'ils sont exécutés par les un ou plusieurs processeurs, amenant les un ou plusieurs processeurs à mettre en œuvre le procédé selon l'une des revendications 1 à 9, ou à mettre en œuvre le procédé selon l'une des revendications 10 à 12.

15. Produit de programme informatique comprenant des instructions informatiques stockées dans un support de stockage lisible par ordinateur, les instructions informatiques, lorsqu'elles sont exécutées, mettant en œuvre le procédé selon l'une des revendications 1 à 9, ou mettant en œuvre le procédé selon l'une des revendications 10 à 12.
